# EUROPÄISCHE PATENTSCHRIFT

(11) **EP 1 857 651 B1**
(45) Veröffentlichungstag und Bekanntmachung des Hinweises auf die Patenterteilung: **19.06.2013**
(21) Anmeldenummer: 07104112.3
(22) Anmeldetag: 14.03.2007
(51) Int. Cl.: F01N 3/20, F01N 3/035, F01N 3/033, F01N 3/28, F01N 1/08, F01N 1/10

(54) **Abgasnachbehandlungseinrichtung für eine Brennkraftmaschine**
Exhaust gas treating device for an internal combustion engine
Équipement de post traitement des gaz d'échappement pour un moteur à combustion interne

(30) Priorität: 19.05.2006 DE 102006023854
(43) Veröffentlichungstag der Anmeldung: 21.11.2007
(73) Patentinhaber: J. Eberspächer GmbH & Co. KG, 73730 Esslingen (DE)
(72) Erfinder: WERNI, Marcus, 71334, Waiblingen (DE); WÖRNER, Siegfried, 73734, Esslingen (DE); BUHMANN, Rudolf, 73732, Esslingen (DE); LEHNEN, Rainer, Dr., 73061 Ebersbach (DE)
(74) Vertreter: BRP Renaud & Partner

(56) Entgegenhaltungen:
- EP-A- 0 579 956
- EP-A- 1 050 670
- EP-A- 1 510 674
- WO-A-01/42630
- US-A1- 2002 106 312

## Beschreibung

Die vorliegende Erfindung betrifft eine Abgasnachbehandlungseinrichtung für eine Brennkraftmaschine, insbesondere in einem Kraftfahrzeug, mit den Merkmalen des Oberbegriffs des Anspruchs 1.

Als selektives katalytisches Reduktionsverfahren (SCR-Verfahren), bezeichnet man eine selektive chemische Reaktion, bei der nicht alle Rauchgaskomponenten des Abgases reduziert werden, sondern nur deren Stickoxide. In der Fahrzeugtechnik wird dieses Verfahren zunehmend in Nutzfahrzeugen mit Dieselkraftstoffmotoren eingesetzt, um die Schadstoffemissionen so weit absenken zu können, damit diese die EU4-Norm erfüllen. Der für die Reduktion benötigte Ammoniak wird nicht direkt, das heißt in reiner Form zugegeben, sondern in Form einer wässrigen Harnstofflösung. Diese wird in den Abgasstrang eingespritzt und bewirkt durch eine Hydrolysereaktion eine Aufspaltung der Harnstoff-Wasserlösung in Ammoniak und Wasser. Der Vorteil des SCR-Verfahrens liegt in der Entfernung von Rußpartikeln und Stickoxiden aus dem Abgas und damit einer deutlich reduzierten Schadstoffemission. Nachteilig bei dem bisherigen Verfahren ist insbesondere, dass die Vermischung des Harnstoffes mit dem zu reinigenden Abgas oftmals nur unzufriedenstellend bewirkt werden kann.

Aus der WO 01/42630 A2 ist eine Abgasnachbehandlungseinrichtung für eine Brennkraftmaschine, insbesondere in einem Kraftfahrzeug, bekannt, umfassend ein Gehäuse, in welches ein in einer Mischkammer mündendes Abgasrohr eindringt, wobei die Mischkammer topfförmig ausgebildet ist und eine Strömungsrichtung von einströmendem Abgas umkehrt und radial außerhalb des Abgasrohres zurückleitet, wobei ein offenes Ende der topfförmigen Mischkammer in einen Sammelraum mündet, wobei stromab der Mischkammer zumindest ein SCR-Katalysator angeordnet ist. Bei der bekannten Abgasnachbehandlungseinrichtung sind mehrere ringförmige SCR-Katalysatoren in einem von der Mischkammer zum Sammelraum führenden Rückstromringraum angeordnet.

Aus der EP 1 050 670 A2 ist eine weitere Abgasnachbehandlungseinrichtung bekannt, bei der stromab des Sammelraums ein SCR-Katalysator angeordnet ist, wobei das Abgas in dieser bekannten Abgasbehandlungseinrichtung vom Abgasrohr bis zum SCR-Katalysator um 180° umgelenkt wird.

Die vorliegende Erfindung beschäftigt sich mit dem Problem, für eine Abgasnachbehandlungseinrichtung der eingangs genannten Art eine verbesserte Ausführungsform anzugeben, die sich insbesondere durch eine verbesserte Vermischung eines Reduktionsmittels mit dem zu reinigenden Abgas auszeichnet.

Dieses Problem wird erfindungsgemäß durch den Gegenstand des unabhängigen Anspruches gelöst. Vorteilhafte Ausführungsformen sind Gegenstand der abhängigen Ansprüche.

Die Erfindung beruht auf dem allgemeinen Gedanken, einen zu reinigenden Abgasstrom in der Abgasnachbehandlungseinrichtung mehrfach umzulenken und dadurch eine besonders gute Durchmischung des Abgases mit dem zugesetzten Harnstoff zu erreichen. Hierzu weist die Abgasnachbehandlungseinrichtung ein Gehäuse auf, in welches ein in einer Mischkammer mündendes Rohr eindringt. Die Mischkammer ist topfförmig ausgebildet und so über die Mündung des Abgasrohres gestülpt, dass sich eine Strömungsrichtung von einströmendem Abgas umkehrt und das Abgas radial außerhalb des Abgasrohres zurückgeleitet wird. Ein offenes Ende der topfförmigen Mischkammer mündet dabei in einem Sammelraum, der vorzugsweise gasdicht ausgebildet ist, und dadurch das Abgas verlustfrei einem nachfolgenden SCR-Katalysator zuführen kann. Der Vorteil der erfindungsgemäßen Abgasnachbehandlungseinrichtung liegt dabei in der insgesamt 360° umfassenden Strömungsumkehr des Abgasstromes und damit einer besonders guten Durchmischung des zu reinigenden Abgases mit dem eingangs der Abgasnachbehandlungseinrichtung zugesetzten Harnstoff beziehungsweise Ammoniak. Die besonders gute Durchmischung bewirkt dabei wiederum eine nahezu vollständige Reduktion der Stickoxide.

Zweckmäßig weist das Abgasrohr im Bereich seiner Mündung eine perforierte Wand auf. Derartige perforierte Wände bewirken größere Turbulenzen, welche im Vergleich zu einem nicht perforierten Abgasrohr eine verbesserte Durchmischung des Harnstoffs beziehungsweise des Reduktionsmittels mit dem zu reinigenden Abgas ergibt.

Bei einer vorteilhaften Ausführungsform der erfindungsgemäßen Lösung ist zumindest eines der nachfolgenden Strömungsleitelemente zwischen der Mischkammer und dem Sammelraum angeordnet: Lochboden, Spin-Element, Drallelement. Die aufgeführten Elemente bewirken alle eine Ab- beziehungsweise Umlenkung des Abgasstroms und damit eine zusätzliche Durchmischung des Abgases. Es ist dabei selbstverständlich, dass die genannten Elemente entweder einzeln oder in beliebiger Kombination miteinander in der erfindungsgemäßen Abgasnachbehandlungseinrichtung zum Einsatz kommen können.

Bei einer weiteren vorteilhaften Ausführungsform der erfindungsgemäßen Lösung ist stromab des SCR-Katalysators ein Schallabsorptionsraum angeordnet. Nach der katalytischen Reaktion im SCR-Katalysator, das heißt nach der Reduktion der Stickoxide, wird somit der Abgasstrom dem Schallabsorptionsraum zugeleitet, welcher, beispielsweise durch eine entsprechende Auskleidung, eine Schallabsorption und damit eine Reduzierung der Schallemission bewirkt. Die Abgasnachbehandlungseinrichtung erfüllt somit nicht nur den Zweck der Reinigung des Abgases, sondern zugleich auch die Funktion eines Schalldämpfers, wodurch eine besonders kompakte Bauweise erreicht werden kann.

Zweckmäßig ist stromab des SCR-Katalysators ein Noₓ-Sensor angeordnet. Ein derartiger Noₓ-Sensor misst den im aus dem SCR-Katalysator ausströmenden Abgas enthaltenen Noₓ-Gehalt und leitet diesen Wert an eine Auswerteeinrichtung weiter, welche den detektierten Wert mit einem vorgeschriebenen Soll-Wert vergleicht. Des weiteren ist vorstellbar, dass entsprechend einer Abweichung zwischen gemessenem Ist-Wert und vorgegebenem Soll-Wert die Harnstoffzufuhr und dadurch der Reduktionsprozess geregelt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch eine Abgasnachbehandlungseinrichtung im Bereich eines Abgasrohres,
- Fig. 2: eine Darstellung wie in Fig. 1, jedoch mit einem anderen Abgasrohr,
- Fig. 3: eine Darstellung wie in Fig. 2, jedoch mit einem weiteren Abgasrohr,
- Fig. 4: eine Darstellung wie in Fig. 3, jedoch mit einem endseitig verschlossenen Abgasrohr,
- Fig. 5: eine Darstellung wie in Fig. 4, jedoch mit im Bereich einer Mündung perforierten Wandung des Abgasrohres,
- Fig. 6: eine Darstellung wie in Fig. 5, jedoch mit einem endseitig offenen Abgasrohr,
- Fig. 7: einen Längsschnitt durch ein Abgasrohr mit einer Venturidüse,
- Fig. 8: einen Längsschnitt durch die Abgasnachbehandlungseinrichtung wie in Fig. 2, jedoch mit mehreren SCR-Katalysatoren,
- Fig. 9: einen Querschnitt durch die Abgasnachbehandlungseinrichtung entlang der Linie IX-IX.

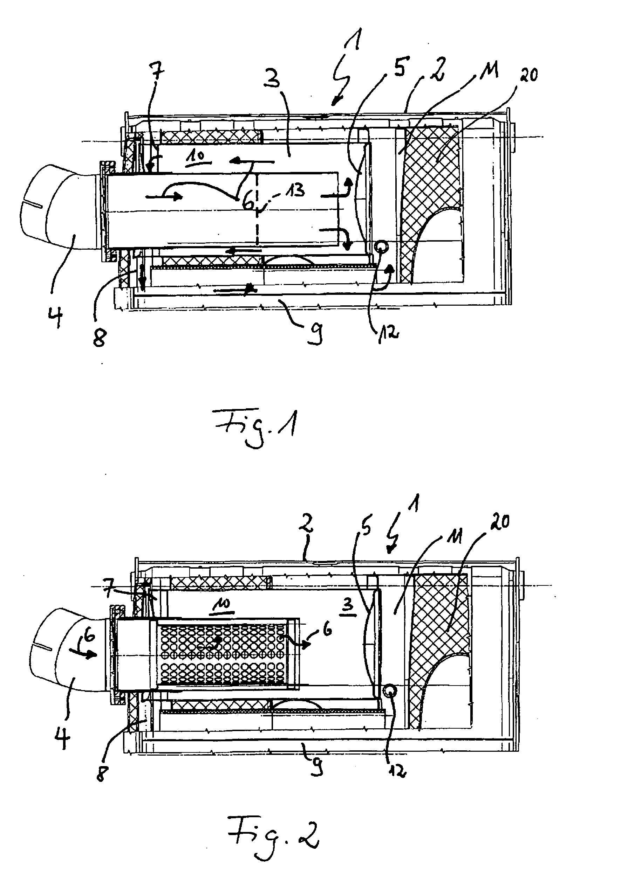

Entsprechend Fig. 1 weist eine erfindungsgemäße Abgasnachbehandlungseinrichtung 1 für eine nicht gezeigte Brennkraftmaschine ein Gehäuse 2 auf, in welches ein in einer Mischkammer 3 mündendes Abgasrohr 4 eindringt. Dabei ist die Mischkammer 3 topfförmig ausgebildet und weist in allen Ausführungsformen einen gewölbten Prallboden 5 auf. Dieser Prallboden 5 kann beispielsweise eine Sintermetallplatte aufweisen oder als solche ausgebildet sein. Die Mischkammer 3 dient zum gründlichen Durchmischen des in die Abgasnachbehandlungseinrichtung 1 einströmenden Abgases, welchem zuvor ein Reduktionsmittel, beispielsweise Harnstoff, zugeführt wird. Für eine erfolgreiche Entfernung der in dem Abgas vorhandenen Stickoxide muss das Abgas vorzugsweise homogen mit dem Reduktionsmittel, also beispielsweise dem Harnstoff, vermischt werden. Wie in Fig. 1 gezeigt, strömt das Abgas entlang der Strömungspfeile 6 von links nach rechts durch das Abgasrohr 4 in die Mischkammer 3 ein. Die topfförmige Ausbildung der Mischkammer 3 bewirkt, dass das einströmende Abgas seine Strömungsrichtung umkehrt und radial außerhalb des Abgasrohres 4, das heißt von rechts nach links, zurückströmt. In einem linken Bereich, das heißt einem offenen Ende 7, der topfförmigen Mischkammer 3 angekommen, strömt das Abgas in einen Sammelraum 8, welcher das Abgas einem nachfolgenden SCR-Katalysator 9 zuführt. Der Sammelraum 8 ist gasdicht ausgebildet, so dass das von der Mischkammer 3 in den Sammelraum 8 geströmte Abgas vorzugsweise verlustfrei dem SCR-Katalysator 9 zugeführt werden kann.

Radial außerhalb des Abgasrohres 4 bildet sich gemäß den Fig. 1 bis 6 ein sogenannter Rückstromringraum 10, in welchem das Abgas mit um 180° umgekehrter Strömungsrichtung 6 zum offenen Ende 7 der Mischkammer 3 strömt. Allen Darstellungen in den Fig. 1 bis 6 ist dabei gemein, dass der für die Reduktion der Stickoxide verantwortliche SCR-Katalysator 9 nur teilweise dargestellt ist.

Stromab des SCR-Katalysators 9 ist vorzugsweise ein zweiter Sammelraum 11 angeordnet, in welchem sich das Abgas sammelt und von dort einem Schallabsorptionsraum 20 zugeführt wird, in welchem beispielsweise ein Akustikfilter und/oder ein Teilchenfilter angeordnet ist. Ebenfalls stromab des SCR-Katalysators 9 ist ein Noₓ-Sensor 12 vorgesehen, welcher den im gereinigten Abgasstrom enthaltenen Stickoxidanteil misst und an eine nicht gezeigte Auswerte- und Steuereinrichtung weiterleitet. Die Auswerte- und Steuereinrichtung vergleicht dann den gemessenen Noₓ-Ist-Wert mit einem vorgegebenen Noₓ-Soll-Wert und steuert gegebenenfalls den Harnstoffanteil nach. Denkbar ist auch, dass bei einem Überschreiten eines Noₓ-Grenzwertes Maßnahmen, wie beispielsweise das Aufleuchten einer Kontrolllampe oder eine Drehmomentenreduzierung eingeleitet werden.

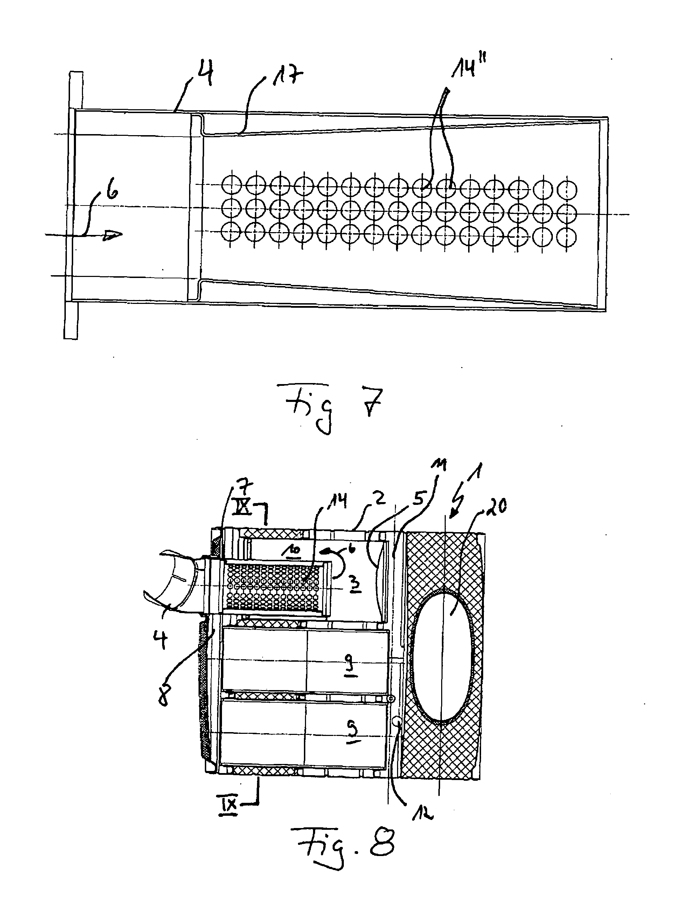

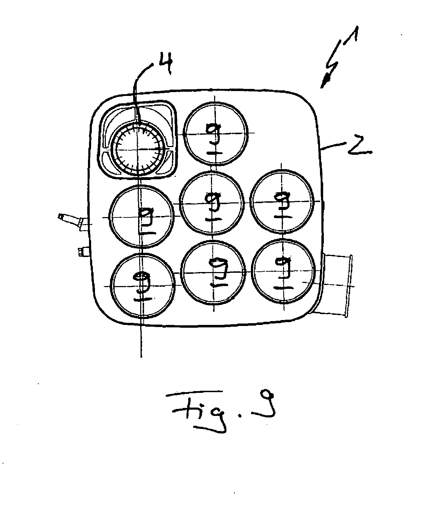

Generell ist vorgesehen, dass die Abgasnachbehandlungseinrichtung 1 möglichst motornah angeordnet ist. Ebenso können mehrere SCR-Katalysatoren 9 parallel zueinander angeordnet werden, die vorzugsweise alle vom gemeinsamen Sammelraum 8 aus mit Abgas beliefert werden. Diese weiteren, lediglich in den Fig. 8 und 9 dargestellten SCR-Katalysatoren 9, könnten beispielsweise in den Fig. 1 bis 6 parallel unter dem dort jeweils eingezeichneten SCR-Katalysator 9 angeordnet sein.

In Abwandlung zu Fig. 1 ist auch vorstellbar, dass das Abgasrohr 4 mit seiner Mündung deutlich weniger in die Mischkammer 3 hineinreicht, und beispielsweise bereits im Bereich einer unterbrochen gezeichneten Linie 13 endet.

Im Folgenden sollen nun unterschiedliche Formen von Mündungsbereichen der Abgasrohre 4 in den Fig. 2 bis 6 näher erläutert werden:
Fig. 2 zeigt ein Abgasrohr 4, dessen Wandung im Bereich der Mischkammer 3 radial nach innen verjüngt ausgeführt ist und im Bereich der Verjüngung perforiert ist. Hierdurch strömt Abgas durch die Perforation radial nach außen und tritt danach gemäß den Strömungspfeilen 6 in die Mischkammer 3 ein. Die Perforation dient dabei ebenfalls zur Unterstützung des Mischungsprozess zwischen Abgas und Reduktionsmittel.

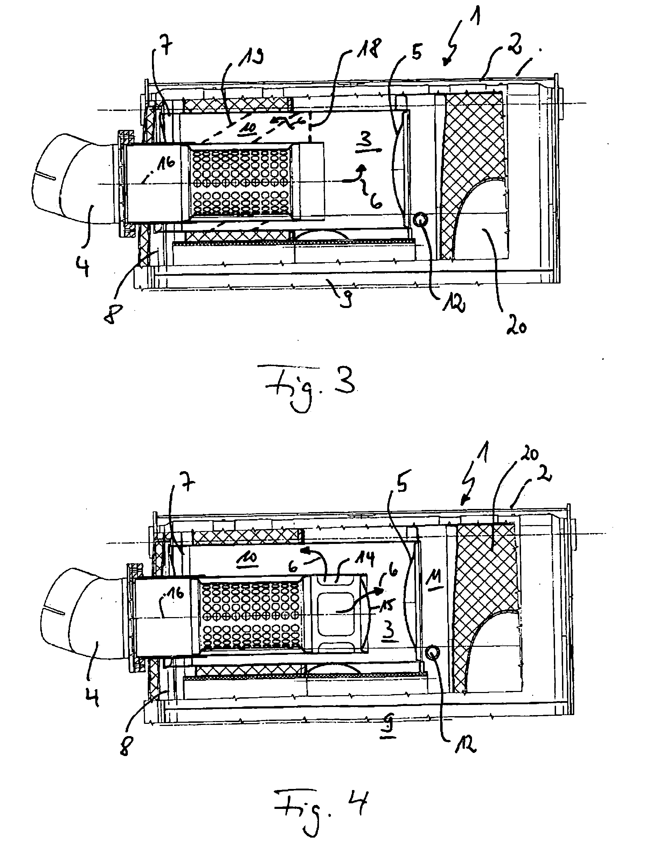

Fig. 3 zeigt ein ebenfalls im Bereich der Mischkammer 3 verjüngtes und in dem verjüngten Bereich perforiertes Abgasrohr 4, wobei im Vergleich zu Fig. 2 eine perforierte Längserstreckung deutlich kleiner gewählt ist. Der Strömungsverlauf erfolgt dabei in nahezu analoger Weise zu Fig. 2, das heißt das Abgas verlässt das Abgasrohr 4 durch dessen axial endseitig angeordnete Öffnung. Um die Durchmischung zwischen dem Reduktionsmittel und dem Abgas zusätzlich zu fördern, können im Rückstromringraum 10 oder in der Mischkammer 3 Strömungsleitelemente 18, wie beispielsweise ein Lochboden, ein Spin-Element oder ein Drallelement angeordnet sein. Denkbar ist, auch, dass die topfförmige Mischkammer 3 entlang des Rückstromringraumes 10 eine Dralleinrichtung in der Art eines perforierten Schneckenganges 19 aufweist.

In Fig. 4 ist ein Abgasrohr 4 gezeigt, welches einen ähnlich perforierten Bereich in der Mischkammer 3 aufweist, wie das Abgasrohr in Fig. 3, wobei hier das Abgas das Abgasrohr 4 jedoch nicht in axialer Richtung stirnseitig verlässt, sondern durch im Mündungsbereich bzw. der Wandung des Abgasrohres 4 vorgesehene Öffnungen 14.

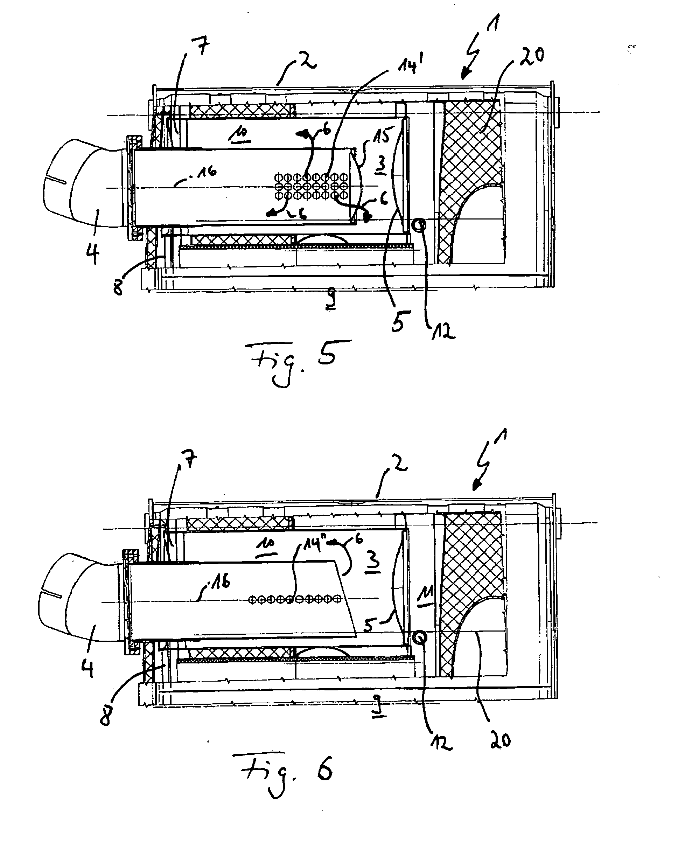

In Fig. 5 ist ein Endbereich des Abgasrohres 4 dargestellt, welcher axial endseitig durch einen Boden 15 verschlossen ist und nahe am axialen Ende des Abgasrohres 4 in der Mischkammer 3 in radialer Richtung durch die Wandung des Abgasrohres 4 durchgehende Öffnungen 14' aufweist.

In Fig. 6 weist der Endbereich des Abgasrohres 4 einen axialen Durchlass sowie in der Wandung des Abgasrohres 4 angebrachte Öffnungen 14" auf. Hierdurch kann das Abgas das Abgasrohr 4 sowohl in axialer als auch in radialer Richtung verlassen, wodurch eine besonders gute Durchmischung in der Mischkammer 3 erzielt werden kann. Die Öffnungen 14" liegen dabei gemäß Fig. 6 auf einer Achse 16 des Abgasrohres 4, wobei auch denkbar ist, dass die Öffnungen 14" in anderer Weise in der Wandung des Abgasrohres 4 angeordnet sind. Durch den Umstand, dass das Abgasrohr 4 mischkammerseitig schräg endet, wird der Mischvorgang in der Mischkammer 3 zusätzlich unterstützt.

Zusätzlich oder alternativ zu den in den Fig. 1 bis 6 dargestellten Endbereichen des Abgasrohres 4, kann das Abgasrohr 4 auch wie in Fig. 7 gezeigt als Venturidüse ausgebildet sein oder einen als Venturidüse ausgebildeten Einsatz 17 aufweisen. In einer derartigen Venturidüse wird ohne zusätzliche aktive Einwirkung ein Unterdruck und eine Erhöhung der Strömungsgeschwindigkeit an der engsten Stelle des Abgasrohres 4 erzeugt. Nach dem Passieren der engsten Stelle sind am Einsatz 17 gemäß Fig. 7 ebenfalls Öffnungen 14" angeordnet, welche eine Durchmischung des Reduktionsmittels mit dem Abgasstrom zusätzlich fördern.

In Fig. 8 ist ein verkleinerter Längsschnitt der erfindungsgemäßen Abgasnachbehandlungseinrichtung 1 gezeigt, wobei unter der Mischkammer 3 zwei SCR-Katalysatoren 9 angeordnet sind, welche alle einenends mit dem Sammelraum 8 und anderenends mit dem zweiten Sammelraum 11 kommunizieren. Dabei kann die Abgasnachbehandlungseinrichtung 1 so ausgebildet sein, dass mehrere, beispielsweise sieben SCR-Katalysatoren wie in Fig. 9 gezeigt, parallel zueinander und über- bzw. nebeneinander angeordnet sind. Die Messung des NOₓ-Gehaltes erfolgt dabei stromab der SCR-Katalysatoren 9, beispielsweise kurz vor einem Schallabsorptionsraum 20. Dabei sind wie oben erwähnt die SCR-Katalysatoren 9 strömungseingangsseitig alle kommunizierend mit dem Sammelraum 8 verbunden, während sie strömungsausgangsseitig alle über den zweiten Sammelraum 11 mit dem Schallabsorptionsraum 20 kommunizierend verbunden sind. Denkbar sind selbstverständlich auch andere, insbesondere eine größere Anzahl an SCR-Katalysatoren 9.

## Patentansprüche

1. Abgasnachbehandlungseinrichtung (1) für eine Brennkraftmaschine, insbesondere in einem Kraftfahrzeug,
- mit einem Gehäuse (2), in welches ein in einer Mischkammer (3) mündendes Abgasrohr (4) eindringt,
- wobei die Mischkammer (3) topfförmig ausgebildet ist und eine Strömungsrichtung (6) von einströmendem Abgas umkehrt und radial außerhalb des Abgasrohres (4) zurückleitet,
- wobei ein offenes Ende (7) der topfförmigen Mischkammer (3) in einen Sammelraum (8) mündet,
- wobei stromab der Mischkammer (3) zumindest ein SCR-Katalysator (9) angeordnet ist,
**dadurch gekennzeichnet,**
- **dass** der Sammelraum (8) das Abgas dem zumindest einen nachfolgenden SCR-Katalysator (9) zuführt,
- **dass** das Abgas in der Abgasbehandlungseinrichtung (1) vom Abgasrohr (4) bis zum wenigstens einen SCR-Katalysator (9) um 360° umgelenkt wird.

2. Abgasnachbehandlungseinrichtung nach Anspruch 1,
**dadurch gekennzeichnet,**
**dass** das über das Abgasrohr (4) in die Mischkammer (3) eintretende Abgas eingangsseitig der Abgasbehandlungseinrichtung (1) mit einem Reduktionsmittel versetzt ist.

3. Abgasnachbehandlungseinrichtung nach Anspruch 1 oder 2,
**dadurch gekennzeichnet,**
**dass** radial außerhalb des Abgasrohrs (4) ein Rückstromringraum (10) ausgebildet ist, in dem das Abgas mit um 180° umgekehrter Strömungsrichtung (6) zum offenen Ende (7) der Mischkammer (3) strömt.

4. Abgasnachbehandlungseinrichtung nach einem der Ansprüche 1 bis 3,
**dadurch gekennzeichnet,**
**dass** das Abgasrohr (4) als Venturidüse ausgebildet ist oder einen als Venturidüse ausgebildeten Einsatz (17) aufweist.

5. Abgasnachbehandlungseinrichtung nach einem der Ansprüche 1 bis 4,
**dadurch gekennzeichnet,**
**dass** in der Mischkammer (3) gegenüberliegend einer Mündung des Abgasrohres (4) ein Prallboden (5) angeordnet ist.

6. Abgasnachbehandlungseinrichtung nach Anspruch 5,
**dadurch gekennzeichnet,**
**dass** der Prallboden (5) eine Sintermetallplatte aufweist.

7. Abgasnachbehandlungseinrichtung nach einem der Ansprüche 1 bis 6,
**dadurch gekennzeichnet,**
**dass** das Abgasrohr (4) im Bereich seiner Mündung eine perforierte Wand aufweist.

8. Abgasnachbehandlungseinrichtung nach einem der Ansprüche 1 bis 7,
**dadurch gekennzeichnet,**
**dass** zwischen der Mischkammer (3) und dem Sammelraum (8) zumindest eines der folgenden Strömungsleitelemente (18) angeordnet ist: Lochboden, Spin-Element, Drallelement.

9. Abgasnachbehandlungseinrichtung nach einem der Ansprüche 1 bis 8,
**dadurch gekennzeichnet,**
**dass** die topfförmige Mischkammer (3) eine Dralleinrichtung in der Art eines perforierten Schneckengangs (19) aufweist.

10. Abgasnachbehandlungseinrichtung nach einem der Ansprüche 1 bis 9,
**dadurch gekennzeichnet,**
**dass** stromab des SCR-Katalysators (9) ein Schallabsorptionsraum (20) angeordnet ist.

11. Abgasnachbehandlungseinrichtung nach Anspruch 10,
**dadurch gekennzeichnet,**
**dass** im Schallabsorptionsraum (20) ein Akustikfilter und/oder ein Teilchenfilter angeordnet ist.

12. Abgasnachbehandlungseinrichtung nach einem der Ansprüche 1 bis 11,
**dadurch gekennzeichnet,**
**dass** die Abgasnachbehandlungseinrichtung (1) motornah angeordnet ist.

13. Abgasnachbehandlungseinrichtung nach einem der Ansprüche 1 bis 12,
**dadurch gekennzeichnet,**
**dass** stromab des SCR-Katalysators (9) ein NOₓ-Sensor (12) angeordnet ist.

## Claims

1. An exhaust gas retreatment device (1) for an internal combustion engine, in particular in a motor vehicle,
- with a housing (2), into which an exhaust pipe (4) opening into a mixing chamber (3) enters,
- wherein the mixing chamber (3) is pot-shaped in design and reverses a flow direction (6) of inflowing exhaust gas guiding it back radially outside the exhaust pipe (5),
- wherein an open end (7) of the pot-shaped mixing chamber (3) opens into a collection chamber (8),
- wherein downstream of the mixing chamber (3) at least one SCR-catalytic converter (9) is arranged,
**characterized in that**
- the collection chamber (8) feeds the exhaust gas to the at least one following SCR-catalytic converter (9),
- the exhaust gas in the exhaust gas retreatment device (1) is deflected from the exhaust pipe (4) as far as to the at least one SCR-catalytic converter (9) by 360°.

2. The exhaust gas retreatment device according to Claim 1,
**characterized in that**
the exhaust gas entering the mixing chamber (3) via the exhaust pipe (4) at the input side of the exhaust gas treatment device (1) is mixed with a reduction agent.

3. The exhaust gas retreatment device according to Claim 1 or 2,
**characterized in that**
radially outside the exhaust pipe (4) a return flow annular chamber (10) is formed, in which the exhaust gas flows towards the open end (7) of the mixing chamber (3) with a flow direction (6) reversed by 180°.

4. The exhaust gas retreatment device according to any one of the Claims 1 to 3,
**characterized in that**
the exhaust pipe (4) is designed as a Venturi nozzle or comprises an insert (17) designed as a Venturi nozzle.

5. The exhaust gas retreatment device according to any one of the Claims 1 to 4,
**characterized in that**
in the mixing chamber (3) a baffle bottom (5) is arranged located opposite a mouth of the exhaust pipe (4).

6. The exhaust gas retreatment device according to Claim 5,
**characterized in that**
the baffle bottom (5) comprises a sintered metal plate.

7. The exhaust gas retreatment device according to any one of the Claims 1 to 6,
**characterized in that**
the exhaust pipe (4) has a perforated wall in the region of its mouth.

8. The exhaust gas retreatment device according to any one of the Claims 1 to 7,
**characterized in that**
between the mixing chamber (3) and the collection chamber (8) at least one of the following flow guiding elements (18) is arranged: perforated bottom, spin element, swirl element.

9. The exhaust gas retreatment device according to any one of the Claims 1 to 8,
**characterized in that**
the pot-shaped mixing chamber (3) comprises a swirling device in the manner of a perforated helical passage (19).

10. The exhaust gas retreatment device according to any one of the Claims 1 to 9,
**characterized in that**
downstream of the SCR-catalytic converter (9) a sound absorption chamber (20) is arranged.

11. The exhaust gas retreatment device according to Claim 10,
**characterized in that**
in the sound absorption chamber (20) an acoustic filter and/or a particle filter is arranged.

12. The exhaust gas retreatment device according to any one of the Claims 1 to 11,
**characterized in that**
the exhaust gas retreatment device (1) is arranged near the engine.

13. The exhaust gas retreatment device according to any one of the Claims 1 to 12,
**characterized in that**
downstream of the SCR-catalytic converter (9) a NOₓ-sensor (12) is arranged.

## Revendications

1. Dispositif de post-traitement de gaz d'échappement (1) d'un moteur à combustion interne, notamment dans un véhicule automobile,
- comportant un logement (2), dans lequel pénètre un tuyau de gaz d'échappement (4) débouchant dans une chambre de mélange (3),
- dans lequel la chambre de mélange (3) est réalisée en forme de pot et inverse une direction d'écoulement (6) du gaz d'échappement affluant et le redirige radialement à l'extérieur du tuyau de gaz d'échappement (4),
- dans lequel une extrémité ouverte (7) de la chambre de mélange (3) en forme de pot débouche dans un espace d'accumulation (8),
- dans lequel en aval de la chambre de mélange (3) au moins un catalyseur SCR (9) est disposé,
**caractérisé en ce que**
- la chambre d'accumulation (8) introduit le gaz d'échappement dans au moins un catalyseur SCR suivant (9),
- le gaz d'échappement est dévié de 360° dans le dispositif de post-traitement de gaz d'échappement (1) depuis le tuyau de gaz d'échappement (4) jusqu'à au moins un catalyseur SCR (9).

2. Dispositif de post-traitement de gaz d'échappement selon la revendication 1,
**caractérisé en ce que**
le gaz d'échappement entrant dans la chambre de mélange (3) en passant par le tuyau de gaz d'échappement (4) est pourvu d'un moyen de réduction du côté d'entrée du dispositif de traitement de gaz d'échappement (1).

3. Dispositif de post-traitement de gaz d'échappement selon les revendications 1 ou 2,
**caractérisé en ce que**
radialement à l'extérieur du tuyau de gaz d'échappement (4) un espace annulaire de courant de retour (10) est réalisé, dans lequel le gaz d'échappement s'écoule avec une direction d'écoulement (6) inverse de 180° jusqu'à l'extrémité ouverte (7) de la chambre de mélange (3).

4. Dispositif de post-traitement de gaz d'échappement selon une des revendications 1 à 3,
**caractérisé en ce que**
le tuyau de gaz d'échappement (4) est conçu comme une buse Venturi ou présente un embout (17) réalisé comme une buse Venturi.

5. Dispositif de post-traitement de gaz d'échappement selon une des revendications 1 à 4,
**caractérisé en ce que**
dans la chambre de mélange (3) un fond de percussion (5) est disposé en vis-à-vis d'une embouchure du tuyau de gaz d'échappement (4).

6. Dispositif de post-traitement de gaz d'échappement selon la revendication 5,
**caractérisé en ce que**
le fond de percussion (5) présente une plaque de métal fritté.

7. Dispositif de post-traitement de gaz d'échappement selon une des revendications 1 à 6,
**caractérisé en ce que**
le tuyau de gaz d'échappement (4) présente au niveau de son embouchure une paroi perforée.

8. Dispositif de post-traitement de gaz d'échappement selon une des revendications 1 à 7,
**caractérisé en ce que**
entre la chambre de mélange (3) et l'espace d'accumulation (8) au moins un des éléments de guidage d'écoulement (18) suivants est disposé : fond perforé, élément de torsion, élément de percussion.

9. Dispositif de post-traitement de gaz d'échappement selon une des revendications 1 à 8,
**caractérisé en ce que**
la chambre de mélange en forme de pot (3) présente un dispositif de percussion sous forme de spirale (19) perforée.

10. Dispositif de post-traitement de gaz d'échappement selon une des revendications 1 à 9,
**caractérisé en ce que**
en aval du catalyseur SCR (9), un espace d'absorption du son (20) est disposé.

11. Dispositif de post-traitement de gaz d'échappement selon la revendication 10,
**caractérisé en ce que**
dans l'espace d'absorption de son (20) un filtre acoustique et/ou un filtre à particules est disposé.

12. Dispositif de post-traitement de gaz d'échappement selon une des revendications 1 à 11,
**caractérisé en ce que**
le dispositif de traitement de gaz d'échappement (1) est disposé près du moteur.

13. Dispositif de post-traitement de gaz d'échappement selon une des revendications 1 à 12,
**caractérisé en ce que**
en aval du catalyseur SCR (9) un capteur de Noₓ (12) est disposé.
